# FASCICULE DE BREVET EUROPEEN

(11) **EP 3 898 147 B1**
(45) Date de publication et mention de la délivrance du brevet: **04.10.2023**
(21) Numéro de dépôt: 19848791.0
(22) Date de dépôt: 19.12.2019
(51) Int. Cl.: B28B 1/24, B28B 1/26, B28B 7/34, B28B 19/00, C04B 35/18, C04B 35/185, C04B 35/447, B28B 23/00, C04B 35/111, C04B 35/14, C04B 35/486, C04B 35/80, B28B 7/36

(54) **OUTILLAGE ET PROCEDE DE FABRICATION D'UNE PIECE EN MATERIAU COMPOSITE PAR VOIE LIQUIDE**
WERKZEUG UND VERFAHREN ZUR HERSTELLUNG EINES VERBUNDWERKSTOFFTEILS MITTELS EINES FLÜSSIGEN VERFAHRENS
TOOL AND METHOD FOR MANUFACTURING A COMPOSITE-MATERIAL PART BY MEANS OF A LIQUID PROCESS

(30) Priorité: 21.12.2018 FR 1874009
(43) Date de publication de la demande: 27.10.2021
(73) Titulaire: Safran Ceramics, 33185 Le Haillan (FR)
(72) Inventeur: PHILIPPE, Eric, 77550 Moissy-Cramayel (FR); BOUNIA, Medhy Damien, 77550 Moissy-Cramayel (FR); CLERAMBOURG, Aurélia, 77550 Moissy-Cramayel (FR)
(74) Mandataire: Cabinet Beau de Loménie
(86) Numéro de dépôt international: PCT/FR2019/053205
(87) Numéro de publication internationale: WO 2020/128364

(56) Documents cités:
- CH-A- 526 376
- FR-A1- 3 030 505
- FR-A1- 3 050 454

## Description

### Domaine Technique

La présente invention se rapporte au domaine général de la fabrication de pièces en matériau composite, notamment à matrice céramique (CMC), c'est-à-dire comprenant un renfort fibreux formé à partir de fibres en matériau céramique densifié par une matrice également en matériau céramique, comme par exemple de type oxyde/oxyde.

### Technique antérieure

Les pièces en matériau composite à matrice céramique (CMC) sont généralement fabriquées par drapage dans un moule d'une pluralité de strates fibreuses réalisées à partir de fibres en matériau céramique, par exemple en carbure ou oxyde, afin de former une préforme fibreuse.

La préforme est ensuite imprégnée avec une barbotine (« *slurry »* selon la terminologie anglo-saxonne) chargée de particules de matériau céramique, comme par exemple également en carbure ou oxyde , par un procédé de moulage par injection dit « RTM ». Dans le cas particulier de la fabrication d'une pièce en matériau céramique CMC de type oxyde/oxyde, les fibres et les particules de la barbotine sont en oxyde, comme par exemple de l'alumine (AI2O3).

Le document FR3030505 décrit un outillage connu dans lequel une préforme fibreuse est disposée dans un logement formé à l'intérieur dudit outillage de manière à donner la forme désirée à ladite préforme fibreuse. L'outillage comprend un orifice d'injection de la barbotine disposé en regard d'une première face de la préforme fibreuse, et un orifice d'évacuation de ladite barbotine qui est situé en regard d'une deuxième face de ladite préforme fibreuse. La préforme fibreuse est disposée sur un filtre, ledit filtre étant situé entre l'orifice d'évacuation et la deuxième face de la préforme afin de retenir les particules de céramiques de la barbotine à l'intérieur de la préforme fibreuse.

L'outillage décrit dans le document FR3030505 rencontre toutefois comme problème de ne pas pouvoir permettre la densification dans le cas où une face de la préforme fibreuse n'est pas accessible, comme par exemple lorsque la préforme fibreuse possède une face qui est recouverte par une couche d'isolation acoustique.

On connaît également le document FR3050454 qui décrit un outillage. Cependant l'outillage décrit dans le document FR3050454 ne permet pas la densification dans le cas où une face de la préforme fibreuse n'est pas accessible.

Le problème se pose notamment pour des pièces de grandes tailles, les pièces comprenant une longueur d'au moins de l'ordre du mètre, pour lesquelles la densification de la préforme dont une face n'est pas accessible rencontre des difficultés.

### Exposé de l'invention

La présente invention a donc pour but principal de pallier de tels inconvénients en proposant un outillage permettant de densifier une préforme fibreuse de grande dimension dont une face n'est pas accessible, par exemple car une face de la texture est recouverte par une couche d'isolation acoustique.

Selon un premier aspect, l'invention propose un outillage pour la fabrication d'une pièce en matériau composite à matrice céramique par injection d'une barbotine, ledit outillage comprenant une chambre d'injection destinée à recevoir au moins une préforme fibreuse à densifier, et:
- la chambre d'injection comprend une pluralité de premiers orifices d'injection qui sont formés dans une première face de ladite chambre d'injection pour l'injection de la barbotine à l'intérieur de la chambre d'injection, lesdits premiers orifices d'injection étant répartis le long de la première face de la chambre d'injection ;
- la chambre d'injection comprend une pluralité de premiers orifices de drainage qui sont formés sur la première face de ladite chambre d'injection pour le drainage d'une phase liquide de la barbotine hors de la chambre d'injection, lesdits premiers orifices de drainage étant répartis le long de la première face de la cavité de calage ; et
- l'outillage comprend un premier élément de filtration qui est situé sur la première face de ladite chambre d'injection et qui est situé en face des premiers orifices de drainage.

Le fait que les premiers orifices d'injection et les premiers orifices de drainage soient situés sur une même face de la chambre d'injection permet de densifier la préforme fibreuse en injectant et en drainant la barbotine par une même face de ladite préforme fibreuse. Cela permet ainsi de densifier la préforme fibreuse même si une face de ladite préforme fibreuse n'est pas accessible car par exemple recouverte d'une couche d'isolation acoustique.

Le fait d'injecter la barbotine par plusieurs orifices d'injection répartis le long de la première surface de la chambre d'injection et de drainer la phase liquide de la barbotine par plusieurs orifices de drainage répartis le long de ladite première surface permet d'améliorer la densification de la préforme fibreuse par l'empilement des particules céramiques. Cela est particulièrement avantageux pour les préformes fibreuses de grandes dimensions pour lesquelles une densification homogène lorsque la barbotine est injectée et drainée par une même face de la préforme fibreuse est plus difficile à obtenir.

L'outillage peut comprendre les caractéristiques additionnelles suivantes, prises seules ou en combinaison suivant les possibilités techniques :
- entre de 2% et 30% de surface de la première face de la chambre d'injection est percée par les premiers orifices d'injection et les premiers orifices de drainage ;
- au moins un premier orifice d'injection est situé entre deux premiers orifices de drainage ;
- la chambre d'injection comprend une première extrémité et une deuxième extrémité opposée à la première extrémité, un premier orifice de drainage étant situé à la première extrémité de la chambre d'injection et un premier orifice de drainage étant situé à la deuxième extrémité de la chambre d'injection ;
- une pluralité de deuxièmes orifices d'injection est située sur une deuxième face de la chambre d'injection qui est opposée à la première face de ladite chambre d'injection, une pluralité de deuxièmes orifices de drainage est située sur ladite deuxième face de ladite chambre d'injection, et un deuxième élément de filtration est situé sur ladite deuxième face de la chambre d'injection en face des deuxièmes orifices de drainage ;
- l'outillage comprend un moule rigide et fixe formant une deuxième face de la chambre d'injection opposée à la première face de ladite chambre d'injection, et dans lequel l'outillage comprend un contre-moule rigide et mobile qui forme la première face de la chambre d'injection ;
- l'outillage comprend un moule rigide et fixe formant une deuxième face de la chambre d'injection opposée à la première face de ladite chambre d'injection, et dans lequel l'outillage comprend une membrane souple qui forme la première face de la chambre d'injection ;
- un feutre drainant est disposé entre l'élément de filtration et les premiers orifices de drainage.

Selon un deuxième aspect, l'invention propose un procédé de fabrication d'une pièce en matériau composite à matrice céramique comprenant les étapes suivantes :
- placement d'une première préforme fibreuse dans une chambre d'injection formée dans un outillage selon l'une quelconque des caractéristiques précédentes ;
- injection d'une barbotine comprenant des particules céramiques en suspension dans une phase liquide dans la première préforme fibreuse par une première face de ladite première préforme fibreuse par une pluralité de premiers orifices d'injection ;
- drainage par une pluralité de premiers orifices de drainage de la phase liquide de la barbotine par la première face de la première préforme fibreuse au travers d'un élément de filtration configuré pour retenir la poudre de particules céramiques dans la première préforme fibreuse.

Le procédé peut comprendre les caractéristiques additionnelles suivantes, prises seules ou en combinaison suivant les possibilités techniques :
- le procédé comprend en outre les étapes suivantes :
   - placement de la première préforme fibreuse et d'une deuxième préforme fibreuse dans la chambre d'injection, la première préforme fibreuse et la deuxième préforme fibreuse étant situées de part et d'autre d'une âme centrale ;
   - injection par une pluralité de deuxièmes orifices d'injection de la barbotine dans la deuxième préforme fibreuse par une première face de ladite deuxième préforme fibreuse ;
   - drainage par une pluralité de deuxièmes orifices de drainage de la phase liquide de la barbotine par la première face de la deuxième préforme fibreuse au travers d'un deuxième élément de filtration configuré pour retenir les particules céramiques dans la deuxième préforme fibreuse.
- la première préforme fibreuse est fixée sur un support poreux, le procédé comprenant une étape d'étanchéisation du support à la barbotine avant l'étape d'injection de la barbotine dans la première préforme fibreuse par injection d'un matériau fugitif dans les porosités dudit support, le procédé comprenant en outre une étape d'élimination du matériau fugitif après le drainage de la phase liquide de la barbotine ;
- la première préforme fibreuse comprend une épaisseur inférieure ou égale à 10mm ;
- au moins une parmi la première préforme fibreuse et la deuxième préforme fibreuse comprend une épaisseur inférieure ou égale à 10mm.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1a] La figure 1a représente une vue schématique d'un outillage pour la fabrication d'une pièce en matériau céramique selon une première variante possible.
[Fig. 1b] La figure 1b représente l'outillage de la figure 1a à l'intérieur duquel une préforme fibreuse est installée.
[Fig. 2] La figure 2 représente une vue schématique d'un outillage pour la fabrication d'une pièce en matériau céramique selon une deuxième variante possible.
[Fig. 3] La figure 3 représente une vue schématique d'un outillage pour la fabrication d'une pièce en matériau céramique selon une troisième variante possible.
[Fig. 4] La figure 4 représente une vue schématique d'un outillage pour la fabrication d'une pièce en matériau céramique selon une quatrième variante possible.
[Fig. 5] La figure 5 représente une vue schématique d'un procédé de fabrication selon une mise en oeuvre de l'invention.
[Fig. 6] La figure 6 représente une vue schématique d'un procédé de fabrication utilisant l'outillage de la figure 3 ou de la figure 4.
[Fig. 7] La figure 7 représente une vue schématique d'une variante possible du procédé de fabrication.

### Description des modes de réalisation

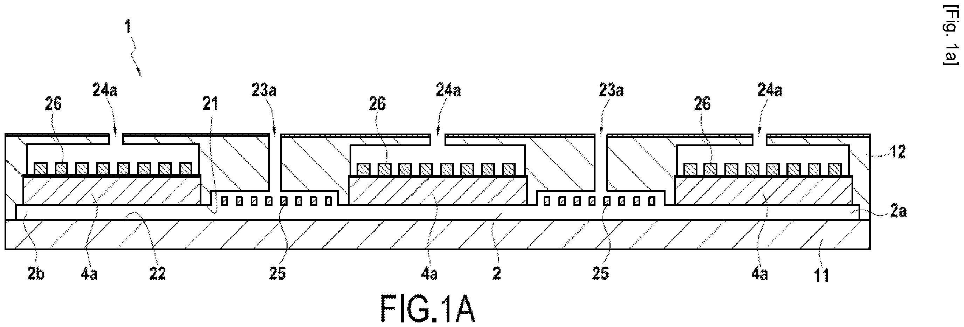

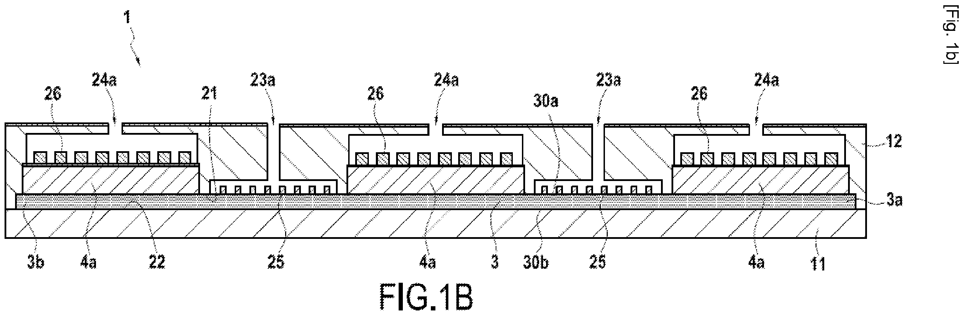

Comme illustré sur les figures 1a et 1b, l'outillage 1 pour la fabrication d'une pièce en matériau composite à matrice céramique comprend une chambre d'injection 2 dans laquelle une préforme fibreuse 3 est installée.

La figure 1a illustre l'outillage 1 sans la préforme fibreuse 3, rendant ainsi visible la chambre d'injection 2, tandis que la figure 1b illustre l'outillage 1 lorsque la préforme fibreuse 3 est installée dans la chambre d'injection 2.

Une fois que la préforme fibreuse 3 est installée dans la chambre d'injection 2, la préforme fibreuse 3 est densifiée par injection d'une barbotine. La barbotine est formée par une phase liquide chargée en particules de céramiques, les particules de céramiques étant destinées à se déposer dans la préforme fibreuse 3 afin de la densifier et former la matrice céramique.

La phase liquide de la barbotine peut notamment être formée par de l'eau (pH acide ou basique), de l'éthanol, ou tout autre liquide dans lequel il est possible de mettre la poudre désirée en suspension. Un liant organique peut être aussi ajouté (PVA, PEG, PVP, soluble dans l'eau). Ce liant permet d'assurer la tenue du cru après séchage et avant frittage.

Les particules de céramique de la barbotine peuvent être en alumine, en mullite, en silice, en zircone, en aluminosilicate ou en aluminophosphate, ou un mélange de ces composants. Les particules de céramique peuvent également être en carbure, par exemple en carbure de silicium. La taille moyenne, ou dimension particulaire moyenne, des particules est comprise entre 0,1 µm et 10 µm. Par « taille moyenne » on désigne la dimension donnée par la distribution granulométrique statistique à la moitié de la population, dite D50.

Dans la première variante de réalisation illustrée sur les figures 1a et 1b, la chambre d'injection 2 est formée par la coopération entre un moule 11 rigide et un contre-moule 12 également rigide. Le contre-moule 12 définit une première face 21 de la chambre d'injection 2, et le moule 11 définit une deuxième face 22 de ladite chambre d'injection 2, la deuxième face 22 étant opposée à la première face 21.

La préforme fibreuse 3 à densifier est placée dans une empreinte formée sur le moule 11, puis le contre-moule 12 est placé en face du moule 11 et comprime la préforme fibreuse 3 afin d'une part de lui donner la forme désirée, et d'autre part afin d'assurer à la pièce à fabriquer un taux volumique de fibres désiré. La préforme fibreuse 3 comprend une première face 30a dirigée vers le contre-moule 12, et une deuxième face 30b opposée à la première face 30a et qui est dirigée vers le moule 11.

Afin d'injecter la barbotine à l'intérieur de la chambre d'injection 2, ladite chambre d'injection 2 comprend une pluralité de premiers orifices d'injection 23a qui sont formés dans la première face 21 de ladite chambre d'injection 2. Les premiers orifices d'injection 23a sont répartis le long de la première face 21.

De plus, afin de permettre l'évacuation de la barbotine de la chambre d'injection 2, ladite chambre d'injection 2 comprend une pluralité de premiers orifices de drainage 24a qui sont formés dans la première face 21. Les premiers orifices de drainage 24a sont répartis le long de la première face 21.

De plus, afin de retenir les particules de céramique de la barbotine à l'intérieur de la chambre d'injection 2 et de la préforme fibreuse 3, l'outillage 1 comprend un premier élément de filtration 4a qui est situé en face des orifices de drainage 24, ledit premier élément de filtration 4a étant situé sur la première face 21 de la chambre d'injection 2.

Le premier élément de filtration 4a est configuré pour laisser passer la phase liquide de la barbotine mais retenir les particules de céramiques. Pour ce faire, le premier élément de filtration 4a peut être un élément poreux dont la taille des porosités est adaptée à la dimension des particules de céramique de la barbotine afin que lesdites particules de céramique de la barbotine ne traversent pas ledit premier élément de filtration 4a et ainsi soient retenues dans la chambre d'injection.

Dans la variante illustrée sur les figures 1a et 1b, les premiers orifices d'injection 23a et les premiers orifices de drainage 24a sont formés dans le contre-moule 12, mais selon une autre variante possible les premiers orifices d'injection 23a et les premiers orifices de drainage 24a sont formés dans le moule 11 (et sont ainsi formés dans la deuxième face 22), et le premier élément de filtration 4a est situé en face des premiers orifices de drainage 24 sur le moule 11.

Le fait que les premiers orifices d'injection 23a et les premiers orifices de drainage 24a sont formés et répartis le long d'une même face de la chambre d'injection 2 permet d'injecter et de drainer par une même face de la préforme fibreuse 3, permettant ainsi de densifier la préforme fibreuse 3 même lorsque une face de ladite préforme fibreuse 3 n'est pas accessible.

De plus, le fait que l'outillage 1 comprenne une pluralité de premiers orifices d'injection 23a et une pluralité de premiers orifices de drainage 24a permet une densification plus homogène de la préforme fibreuse 3.

En effet, le fait d'injecter et de drainer la barbotine par la même face de la préforme 3 tend à créer une concentration des particules de céramiques au niveau des premiers orifices d'injection 23a. La multiplicité des premiers orifices d'injection 23a et des premiers orifices de drainage 24a permet de limiter la concentration des particules au niveau des premiers orifices d'injection 23a.

Ces caractéristiques sont particulièrement avantageuses lorsque la préforme fibreuse 3 est de grande dimension, car une densification homogène d'une préforme fibreuse 3 de grande dimension par injection et drainage de la barbotine par une même face de ladite préforme fibreuse 3 est plus difficile à réaliser que lorsque l'injection de la barbotine est réalisée par une première face de la préforme fibreuse 3 et lorsque le drainage de la barbotine est réalisé par une seconde face de ladite préforme fibreuse opposée à la première face. La préforme fibreuse peut comprendre une surface comprise entre 200×200mm et quelques m².

Selon une caractéristique avantageuse permettant d'améliorer l'homogénéité du dépôt des particules de céramiques dans la préforme fibreuse 3, au moins un premier orifice d'injection 23a est situé entre deux premiers orifices de drainage 24a.

De préférence, chaque premier orifice d'injection 23a est situé entre deux premiers orifices de drainage 24a.

De plus, de manière avantageuse, le diamètre des premiers orifices d'injection 23a et des premiers orifices de drainage 24a est adapté pour que lesdits premiers orifices d'injection 23a et lesdits premiers orifices de drainage 24a représentent entre 2% et 30% de la surface de la première face 21 de la chambre d'injection 2. Autrement dit, la surface de perçage des premiers orifices d'injection 23a, plus la surface de perçage des orifices de drainage 24a, correspond à entre 2% et 30% de la surface de la première face 21 de la chambre d'injection 2. De manière avantageuse, entre 10% et 20% de la surface de la première face 21 peut être percée par les premiers orifices d'injection 23a et les premiers orifices de drainage 24a. Cette caractéristique permet d'améliorer l'homogénéité du dépôt des particules de céramiques à l'intérieur de la préforme fibreuse 3. La surface de la première face 21 de la chambre d'injection est très proche de la surface de la préforme fibreuse 3.

Comme visible sur les figures 1a et 1b, de manière avantageuse, la chambre d'injection 2 comprend une première extrémité 2a et une deuxième extrémité 2b qui est opposée à la première extrémité 2a, un premier orifice de drainage 24a étant situé à la première extrémité 2a et un autre premier orifice de drainage 24a étant situé à la deuxième extrémité 2b.

Ainsi, lorsque la préforme fibreuse 3 est située dans la chambre d'injection 2, le premier orifice de drainage 24a situé à la première extrémité 2a de la chambre d'injection 2 est situé en regard d'une première extrémité 3a de ladite préforme fibreuse 3, tandis que le premier orifice de drainage 24a situé à la deuxième extrémité 2b de la chambre d'injection 2 est situé en regard d'une deuxième extrémité 3b de ladite préforme fibreuse 3 qui est opposée à la première extrémité 3a.

Le fait que des premiers orifices de drainage 24a soient situés aux extrémités de la chambre d'injection 2 permet de positionner des premiers orifices de drainage 24 aux extrémités de la préforme fibreuse 3, et ainsi permet d'assurer une meilleure circulation de la barbotine aux extrémités de la préforme fibreuse 3, améliorant ainsi l'homogénéité de la densification de ladite préforme fibreuse 3.

Comme visible sur les figures 1a et 1b, un grillage 25 peut être disposé dans les premiers orifices d'injection 23a afin d'une part d'empêcher les fils de la préforme fibreuse 3 de former un renflement au niveau des premiers orifices d'injection 23, et d'autre part d'améliorer la répartition de la barbotine.

Un grillage 26 peut également être disposé dans les premiers orifices de drainage 24a, par-dessus le premier élément de filtration 4a. Ainsi, le premier élément de filtration 4a est situé entre la préforme fibreuse 3 et le grillage 26. Le grillage 26 situé dans les premiers orifices de drainage 24a permet d'assurer le maintien de l'élément de filtration 4 dans les premiers orifices de drainage 24a.

Selon une caractéristique possible, la préforme fibreuse 3 comprend une épaisseur qui est inférieure ou égale à 10mm. Une telle épaisseur de la préforme fibreuse 3 est adaptée pour une injection et un drainage de la barbotine par la même face, permettant d'améliorer le dépôt des particules de céramique au sein de ladite préforme fibreuse 3, et notamment au niveau de la face de la préforme fibreuse 3 qui est opposée à la première face 21 de la chambre d'injection 2.

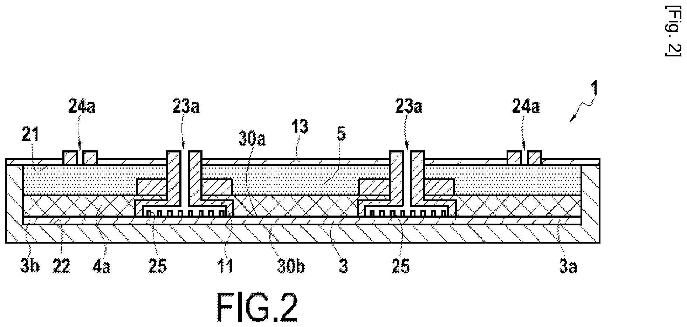

Selon une deuxième variante illustrée sur la figure 2, le compactage de la préforme fibreuse 3 peut être réalisée par coopération du moule 11 avec une membrane souple 13, au lieu de la coopération du moule 11 avec un contre-moule 12 comme cela est réalisé dans la première variante des figures 1a et 1b.

Dans cette deuxième variante, la préforme fibreuse 3 est installée dans la chambre d'injection 2 qui est formée par la membrane souple 13 et le moule 11, la membrane souple 13 formant la première face 21 de la chambre d'injection 2 et le moule 11 formant la deuxième face 22 de ladite chambre d'injection 2. La première face 30a de la préforme fibreuse est dirigée vers la membrane souple 13, et la deuxième face 30b est dirigée vers le moule 11.

Une fois la préforme fibreuse 3 disposée dans la chambre d'injection 2, la préforme fibreuse 3 est compactée par la membrane souple 13 afin que la pièce à fabriquer possède le taux volumique de fibre désiré, et ladite préforme fibreuse 3 est densifiée par injection de la barbotine dans la chambre d'injection 2 via la pluralité de premiers orifices d'injection 23a formés dans la première face 21 de la chambre d'injection 2. La barbotine est drainée par les premiers orifices de drainage 24a.

La disposition des premiers orifices d'injection 23a et des premiers orifices de drainage 24a de l'outillage 1 selon la deuxième variante illustrée sur la figure 2 peut être similaire à celle de la première variante illustrée sur les figures 1a et 1b. Sur la figure 2, les premiers orifices d'injection 23a ne sont pas disposés entre deux premiers orifices de drainage 24a, toutefois les premiers orifices d'injection 23a peuvent être disposés entre deux premiers orifices de drainage 24a.

De plus, de manière similaire à la première variante, l'outillage 1 selon la deuxième variante illustrée sur la figure 2 comprend un premier élément de filtration 4a qui est situé en regard des premiers orifices de drainage 24a afin de retenir les particules de céramiques à l'intérieur de la préforme fibreuse 3. Le premier élément de filtration 4a est situé entre la préforme fibreuse 3 et la première face 21 de la chambre d'injection 2.

Comme cela est illustré sur la figure 2, l'outillage 1 peut comprendre un feutre drainant 5 qui est disposé entre la membrane souple 13 et le premier élément de filtration 4a. Le feutre drainant permet de faciliter la circulation du fluide vers les orifices de drainage 24a.

De manière similaire à la première variante, l'outillage 1 selon la deuxième variante peut comprend un grillage 25 disposé dans les premiers orifices d'injection 23a afin d'une part empêcher les fils de la préforme fibreuse 3 de former un renflement au niveau des premiers orifices d'injection 23a, et d'autre part d'améliorer la répartition de la barbotine.

Dans les variantes de réalisation illustrées sur les figures 1a, 1b et 2, la préforme fibreuse 3 seule est installée dans la chambre d'injection 2. Toutefois, la préforme fibreuse 3 peut être installée dans la chambre d'injection 2 en étant fixée sur un support, ledit support pouvant par exemple être une couche d'isolation acoustique, ou une couche de structure. Cependant, lorsque le support est une âme centrale et que la pièce à fabriquer comprend deux préformes fibreuses disposées de part et d'autre de l'âme centrale, les variantes illustrées sur les figures 1a, 1b et 2 ne sont pas adaptées pour densifier simultanément les deux préformes fibreuses.

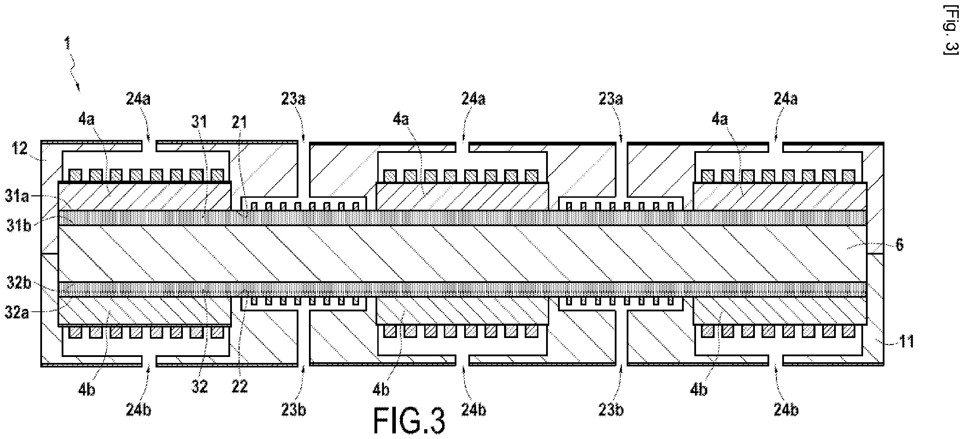

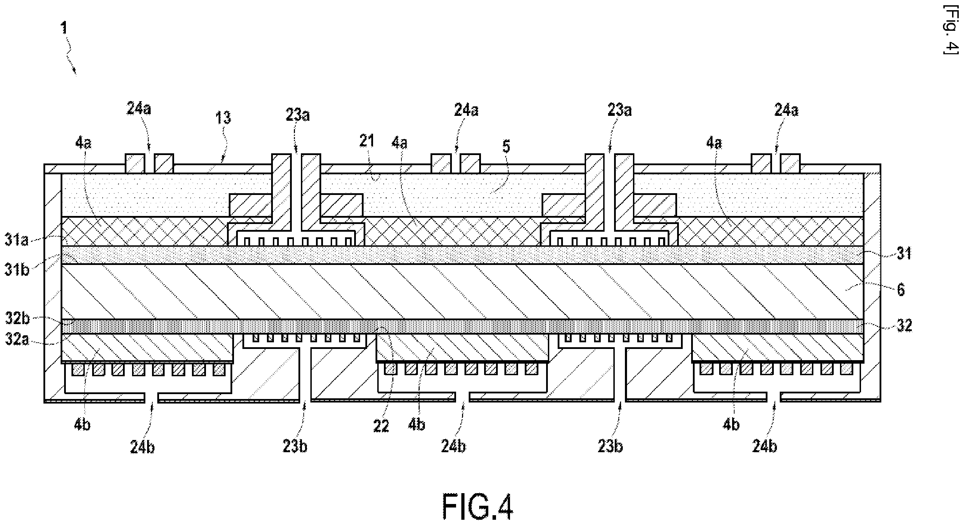

La figure 3 et la figure 4 illustrent respectivement une troisième variante et une quatrième variante de réalisation d'outillage 1 permettant de densifier en une seule fois une pièce qui comprend une première préforme fibreuse 31 et une deuxième préforme fibreuse 32 qui sont situées de part et d'autre d'une âme centrale 6. De manière avantageuse, au moins une parmi la préforme fibreuse 31 et la deuxième préforme fibreuse 32 comprend une épaisseur inférieure ou égale à 10mm, avantageusement la préforme fibreuse 31 et la deuxième préforme fibreuse 32 comprennent toutes les deux une épaisseur inférieure ou égale à 10mm. La première préforme fibreuse 31 comprend une première face 31a qui est dirigée en regard de la première face 21 de chambre d'injection 2, et une deuxième face 31b opposée à la première face 31a et qui est fixée à l'âme centrale 6. La deuxième préforme fibreuse 32 comprend une première face 32a qui est dirigée en regard de la deuxième face 22 de chambre d'injection 2, et une deuxième face 32b opposée à la première face 32a et qui est fixée à l'âme centrale 6.

L'âme centrale 6 peut par exemple être une couche d'isolation acoustique, ou une couche de structure qui a pour fonction d'améliorer la tenue mécanique de la pièce à fabriquer. L'âme centrale 6 peut notamment être une structure en nid d'abeille.

Dans la troisième variante et la quatrième variante des figures 3 et 4, en plus de disposer d'une pluralité de premiers orifices d'injection 23a et d'une pluralité de premiers orifices de drainage 24a sur la première face 21 de la chambre d'injection 2, l'outillage 1 comprend une pluralité de deuxièmes orifices d'injection 23b et une pluralité de deuxièmes orifices de drainage 24b sur la deuxième face 22 de la chambre d'injection 2.

Dans la troisième variante illustrée sur la figure 3, de manière similaire à la première variante illustrée sur les figures 1a et 1b, la chambre d'injection 2 est formée par la coopération du moule 11 et du contre-moule 12. Le contre-moule 12 forme la première face 21 de la chambre d'injection 2 tandis que le moule 11 forme la deuxième face 22 de ladite chambre d'injection 2.

La répartition des premiers orifices d'injection 23a et des premiers orifices de drainage 24a sur le contre-moule 12 dans la troisième variante est similaire à la répartition des premiers orifices d'injection 23a et des premiers orifices de drainage 24a sur le contre-moule 12 dans la première variante. De plus, dans la troisième variante illustrée sur la figure 3, la répartition des deuxièmes orifices d'injection 23b et des deuxièmes orifices de drainage 24b sur le moule 11 peut être similaire à la répartition des premiers orifices d'injection 23a et des premiers orifices de drainage 24a sur le contre-moule 12.

Dans la quatrième variante illustrée sur la figure 4, de manière similaire à la deuxième variante illustrée sur la figure 2, la chambre d'injection 2 est formée par la coopération du moule 11 et de la membrane souple 13. La membrane souple 13 forme la première face 21 de la chambre d'injection 2 tandis que le moule 11 forme la deuxième face 22 de ladite chambre d'injection 2.

La répartition des premiers orifices d'injection 23a et des premiers orifices de drainage 24a sur la membrane souple 13 dans la quatrième variante est similaire à la répartition des premiers orifices d'injection 23a et des premiers orifices de drainage 24a sur la membrane souple 13 dans la deuxième variante. De plus, dans la quatrième variante illustrée sur la figure 3, la répartition des deuxièmes orifices d'injection 23b et des deuxièmes orifices de drainage 24b sur le moule 11 est similaire à la répartition des premiers orifices d'injection 23a et des premiers orifices de drainage 24a sur le moule 11 de la troisième variante.

Comme visible sur les figures 3 et 4, l'outillage 1 de la troisième variante et de la quatrième variante comprend un deuxième élément de filtration 4b qui est situé en face des deuxièmes orifices de drainage 24b formés dans la deuxième face 22 de la chambre d'injection 2. De plus, de manière similaire aux première et deuxième variantes, l'outillage 1 comprend le premier élément de filtration 4a qui est situé en face des premiers orifices de drainage 24a formés dans la première face 21 de la chambre d'injection 2.

Ainsi, l'outillage 1 de la troisième variante et de la quatrième variante des figures 3 et 4 permet de densifier simultanément la première préforme fibreuse 31 et la deuxième préforme fibreuse 32 en injectant et en drainant la barbotine par une même face desdites première préforme fibreuse 31 et deuxième préforme fibreuse 32.

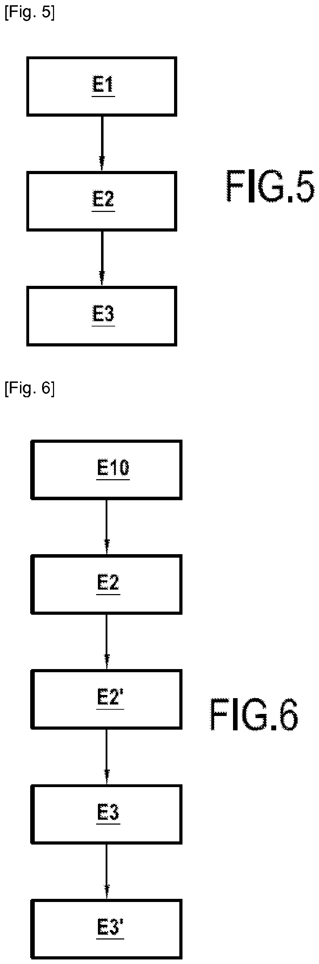

Comme illustré sur la figure 5, selon une mise en oeuvre possible de l'invention, un procédé de fabrication d'une pièce en matériau composite à matrice céramique comprend les étapes suivantes :
- E1 : placement d'une première préforme fibreuse dans la chambre d'injection 2 formée dans l'outillage 1 selon l'une quelconque des variantes illustrées sur les figures 1 à 4. La préforme fibreuse peut être une préforme fibreuse seule, ou bien une préforme fibreuse située sur un support, le support pouvant par exemple être une âme centrale et la préforme fibreuse est située d'un côté de ladite âme centrale
- E2 : injection de la barbotine dans la première préforme fibreuse par une première face de ladite première préforme fibreuse par la pluralité de premiers orifices d'injection 23a ;
- E3 : drainage par la pluralité de premiers orifices de drainage 24a de la phase liquide de la barbotine par la première face de la première préforme fibreuse au travers du premier élément de filtration 4a afin de retenir les particules céramiques dans la première préforme fibreuse.

Une fois la préforme fibreuse densifiée, ladite préforme fibreuse est séchée, puis démoulée et les particules de céramiques peuvent être frittées. De plus, dans le cas d'une pièce composite carbure/carbure, du métal fondu tel que du silicium peut être injecté dans les porosités du matériau composite à matrice céramique.

Comme illustré sur la figure 6, lorsque une première préforme fibreuse 31 et une deuxième préforme fibreuse 32 sont situées de part et d'autre d'une âme centrale 6, comme dans la troisième variante et la quatrième variante illustrées respectivement sur les figures 3 et 4, le procédé peut comprendre les étapes suivantes :
- E10 : placement de la première préforme fibreuse 31 et de la deuxième préforme fibreuse 32 dans la chambre d'injection 2 ;
- E2 : injection de la barbotine dans la première préforme fibreuse 31 par la première face 31a de ladite première préforme fibreuse 31 par la pluralité de premiers orifices d'injection 23a ;
- E2' : injection par une pluralité de deuxièmes orifices d'injection 23b de la barbotine dans la deuxième préforme fibreuse 32 par la première face 32a de ladite deuxième préforme fibreuse 32 ;
- E3 : drainage par la pluralité de premiers orifices de drainage 24a de la phase liquide de la barbotine par la première face 31a de la première préforme fibreuse 31 au travers du premier élément de filtration 4a afin de retenir la poudre de particules céramiques dans la première préforme fibreuse 31 ;
- E3' : drainage par la pluralité de deuxièmes orifices de drainage 24b de la phase liquide de la barbotine par la première face 32a de la deuxième préforme fibreuse 32 au travers du deuxième élément de filtration 4b afin de retenir la poudre de particules céramiques dans la deuxième préforme fibreuse 32.

Les étapes d'injection E2 et E2' peuvent être avantageusement réalisées simultanément, et les étapes de drainage E3 et E3' peuvent également être réalisées avantageusement de manière simultanée.

Une fois les première et deuxième préformes fibreuses 31 et 32 densifiées, les première et deuxième préformes fibreuses 31 et 32 sont séchées, puis démoulées et les particules de céramiques peuvent être frittées. Dans le cas d'une pièce composite carbure/carbure, du métal fondu tel que du silicium peut être injecté dans les porosités du matériau composite à matrice céramique.

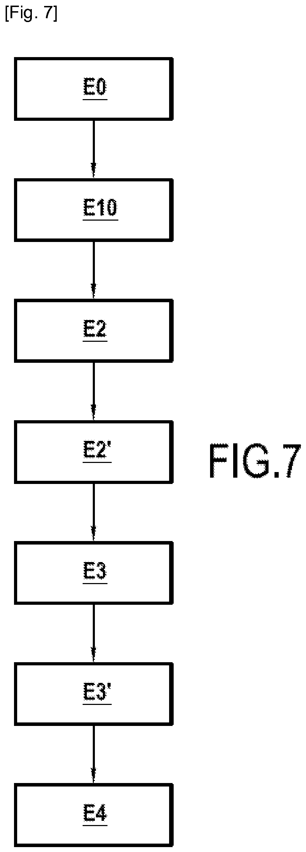

Comme illustré sur la figure 7, lorsque la ou les préformes fibreuses sont fixées sur un support poreux, par exemple lorsqu'une première préforme fibreuse 31 et une deuxième préforme fibreuse 32 sont situées de part et d'autre d'une âme centrale 6 poreuse, le procédé peut comprendre une étape d'étanchéisation E0 du support à la barbotine avant l'étape d'injection E2 et/ou E2' de la barbotine dans la ou les textures fibreuses. L'étape d'étanchéisation E0 du support est réalisée par injection d'un matériau fugitif, par exemple du polyméthacrylate de méthyle (PMMA) dans les porosités dudit support. Ainsi, lorsque le support est en nid d'abeille, le matériau fugitif est injecté dans les alvéoles du nid d'abeille. Le procédé comprend également une étape d'élimination E4 du matériau fugitif après l'étape de drainage E3 et/ou E3' de la phase liquide. Le matériau fugitif peut par exemple être éliminé par fusion puis par coulage, ou bien par décomposition thermique (pyrolyse).

## Revendications

1. Outillage (1) pour la fabrication d'une pièce en matériau composite à matrice céramique par injection d'une barbotine, ledit outillage (1) comprenant une chambre d'injection (2) destinée à recevoir au moins une préforme fibreuse (3) à densifier, et:
- la chambre d'injection (2) comprend une pluralité de premiers orifices d'injection (23a) qui sont formés dans une première face (21) de ladite chambre d'injection (2) pour l'injection de la barbotine à l'intérieur de la chambre d'injection (2), lesdits premiers orifices d'injection (23a) étant répartis le long de la première face (21) de la chambre d'injection (2) ;
- la chambre d'injection (2) comprend une pluralité de premiers orifices de drainage (24a) qui sont formés sur la première face (21) de ladite chambre d'injection (2) pour le drainage d'une phase liquide de la barbotine hors de la chambre d'injection (2), lesdits premiers orifices de drainage (24a) étant répartis le long de la première face (21) de la chambre d'injection (2) ; et
- l'outillage (1) comprend un premier élément de filtration (4) qui est situé sur la première face (21) de ladite chambre d'injection (2) et qui est situé en face des premiers orifices de drainage (24a).

2. Outillage (1) selon la revendication 1, dans lequel entre de 2% et 30% de surface de la première face (21) de la chambre d'injection (2) est percée par les premiers orifices d'injection (23a) et les premiers orifices de drainage (24a).

3. Outillage (1) selon l'une quelconque des revendications 1 à 2, dans lequel au moins un premier orifice d'injection (23a) est situé entre deux premiers orifices de drainage (24a).

4. Outillage (1) selon l'une quelconque des revendications 1 à 3, dans lequel la chambre d'injection (2) comprend une première extrémité (2a) et une deuxième extrémité (2b) opposée à la première extrémité (2a), un premier orifice de drainage (24a) étant situé à la première extrémité (2a) de la chambre d'injection (2) et un premier orifice de drainage (24a) étant situé à la deuxième extrémité (2b) de la chambre d'injection (2).

5. Outillage (1) selon l'une quelconque des revendications 1 à 4, dans lequel une pluralité de deuxièmes orifices d'injection (23b) est située sur une deuxième face (22) de la chambre d'injection (2) qui est opposée à la première face (21) de ladite chambre d'injection (2), dans lequel une pluralité de deuxièmes orifices de drainage (24b) est située sur ladite deuxième face (22) de ladite chambre d'injection (2), et dans lequel un deuxième élément de filtration (4b) est situé sur ladite deuxième face (22) de la chambre d'injection (2) en face des deuxièmes orifices de drainage (24b).

6. Outillage (1) selon l'une quelconque des revendications 1 à 5, dans lequel ledit outillage (1) comprend un moule (11) rigide et fixe formant une deuxième face (22) de la chambre d'injection (2) opposée à la première face (21) de ladite chambre d'injection (2), et dans lequel l'outillage (1) comprend un contre-moule (12) rigide et mobile qui forme la première face (21) de la chambre d'injection (2).

7. Outillage (1) selon l'une quelconque des revendications 1 à 5, dans lequel ledit outillage (1) comprend un moule (11) rigide et fixe formant une deuxième face (22) de la chambre d'injection (2) opposée à la première face (21) de ladite chambre d'injection (2), et dans lequel l'outillage (1) comprend une membrane souple (13) qui forme la première face (21) de la chambre d'injection (2).

8. Outillage (1) selon la revendication 7, dans lequel un feutre drainant (5) est disposé entre le premier élément de filtration (4a) et les premiers orifices de drainage (24a).

9. Procédé de fabrication d'une pièce en matériau composite à matrice céramique comprenant les étapes suivantes :
- (E1) : placement d'une première préforme fibreuse (3, 31) dans une chambre d'injection (2) formée dans un outillage (1) selon l'une quelconque des revendications 1 à 8 ;
- (E2) : injection d'une barbotine comprenant des particules céramiques en suspension dans une phase liquide dans la première préforme fibreuse (3, 31) par une première face (30a, 31a) de ladite première préforme fibreuse (3, 31) par une pluralité de premiers orifices d'injection (23a) ;
- (E3) : drainage par une pluralité de premiers orifices de drainage (24a) de la phase liquide de la barbotine par la première face (30a, 31a) de la première préforme fibreuse (3, 31) au travers d'un premier élément de filtration (4a) configuré pour retenir les particules céramiques dans la première préforme fibreuse (3, 31).

10. Procédé selon la revendication 9, comprenant en outre les étapes suivantes :
- (E10) : placement de la première préforme fibreuse (31) et d'une deuxième préforme fibreuse (32) dans la chambre d'injection (2), la première préforme fibreuse (31) et la deuxième préforme fibreuse (32) étant situées de part et d'autre d'une âme centrale (6) ;
- (E2') : injection par une pluralité de deuxièmes orifices d'injection (23b) de la barbotine dans la deuxième préforme fibreuse (32) par une première face (32a) de ladite deuxième préforme fibreuse (32) ;
- (E3') : drainage par une pluralité de deuxièmes orifices de drainage (24b) de la phase liquide de la barbotine par la première face (32a) de la deuxième préforme fibreuse (32) au travers d'un deuxième élément de filtration (4b) configuré pour retenir les particules céramiques dans la deuxième préforme fibreuse (32).

11. Procédé selon l'une quelconque des revendications 9 ou 10, dans lequel la première préforme fibreuse (3, 31) est fixée sur un support poreux, le procédé comprenant une étape d'étanchéisation (E0) du support à la barbotine avant l'étape d'injection (E2, E2') de la barbotine dans la première préforme fibreuse (3, 31) par injection d'un matériau fugitif dans les porosités dudit support, le procédé comprenant en outre une étape d'élimination du matériau fugitif (E4) après le drainage de la phase liquide de la barbotine.

12. Procédé selon l'une quelconque des revendications 9 à 11, dans lequel la première préforme fibreuse (3, 31) a une épaisseur inférieure ou égale à 10mm.

13. Procédé selon l'une quelconque des revendications 10 ou 11, dans lequel au moins une parmi la première préforme fibreuse (31) et la deuxième préforme fibreuse (32) a une épaisseur inférieure ou égale à 10mm.

## Patentansprüche

1. Werkzeug (1) zur Herstellung eines Teils aus Verbundmaterial mit keramischer Matrix durch Einspritzen eines Tonschlamms, wobei das Werkzeug (1) eine Einspritzkammer (2) umfasst, die dazu bestimmt ist, zumindest eine zu verdichtende Faser-Vorform (3) aufzunehmen, und
- die Einspritzkammer (2) mehrere erste Einspritzöffnungen (23a) umfasst, die in einer ersten Seitenfläche (21) der Einspritzkammer (2) für die Einspritzung des Tonschlamms in das Innere der Einspritzkammer (2) gebildet sind, wobei die ersten Einspritzöffnungen (23a) entlang der ersten Seitenfläche (21) der Einspritzkammer (2) verteilt sind,
- die Einspritzkammer (2) mehrere erste Abzugsöffnungen (24a) umfasst, die auf der ersten Seitenfläche (21) der Einspritzkammer (2) für das Abziehen einer flüssigen Phase des Tonschlamms aus der Einspritzkammer (2) gebildet sind, wobei die ersten Abzugsöffnungen (24a) entlang der ersten Seitenfläche (21) der Einspritzkammer (2) verteilt sind, und
- das Werkzeug (1) ein erstes Filtrationselement (4) umfasst, das sich auf der ersten Seitenfläche (21) der Einspritzkammer (2) befindet und das sich gegenüber den ersten Abzugsöffnungen (24a) befindet.

2. Werkzeug (1) nach Anspruch 1, wobei zwischen 2 % und 30 % der Oberfläche der ersten Seitenfläche (21) der Einspritzkammer (2) von den ersten Einspritzöffnungen (23a) und den ersten Abzugsöffnungen (24a) durchdrungen werden.

3. Werkzeug (1) nach einem der Ansprüche 1 bis 2, wobei zumindest eine erste Einspritzöffnung (23a) sich zwischen zwei ersten Abzugsöffnungen (24a) befindet.

4. Werkzeug (1) nach einem der Ansprüche 1 bis 3, wobei die Einspritzkammer (2) ein erstes Ende (2a) und ein zweites Ende (2b) gegenüber dem ersten Ende (2a) umfasst, wobei eine erste Abzugsöffnung (24a) sich an dem ersten Ende (2a) der Einspritzkammer (2) befindet und eine erste Abzugsöffnung (24a) sich an dem zweiten Ende (2b) der Einspritzkammer (2) befindet.

5. Werkzeug (1) nach einem der Ansprüche 1 bis 4, wobei mehrere zweite Einspritzöffnungen (23b) sich auf einer zweiten Seitenfläche (22) der Einspritzkammer (2) befinden, die der ersten Seitenfläche (21) der Einspritzkammer (2) gegenüberliegt, wobei mehrere zweite Abzugsöffnungen (24b) sich auf der zweiten Seitenfläche (22) der Einspritzkammer (2) befinden, und wobei ein zweites Filtrationselement (4b) sich auf der zweiten Seitenfläche (22) der Einspritzkammer (2) gegenüber den zweiten Abzugsöffnungen (24b) befindet.

6. Werkzeug (1) nach einem der Ansprüche 1 bis 5, wobei das Werkzeug (1) eine steife und fixierte Form (11) umfasst, die eine zweite Seitenfläche (22) der Einspritzkammer (2) gegenüber der ersten Seitenfläche (21) der Einspritzkammer (2) bildet, und wobei das Werkzeug (1) eine steife und bewegliche Gegenform (12) umfasst, welche die erste Seitenfläche (21) der Einspritzkammer (2) bildet.

7. Werkzeug (1) nach einem der Ansprüche 1 bis 5, wobei das Werkzeug (1) eine steife und fixierte Form (11) umfasst, die eine zweite Seitenfläche (22) der Einspritzkammer (2) gegenüber der ersten Seitenfläche (21) der Einspritzkammer (2) bildet, und wobei das Werkzeug (1) eine flexible Membran (13) umfasst, welche die erste Seitenfläche (21) der Einspritzkammer (2) bildet.

8. Werkzeug (1) nach Anspruch 7, wobei ein Entwässerungsfilz (5) zwischen dem ersten Filtrationselement (4a) und den ersten Abzugsöffnungen (24a) vorgesehen ist.

9. Verfahren zur Herstellung eines Teils aus Verbundmaterial mit keramischer Matrix, umfassend die folgenden Schritte:
- (E1): Platzieren einer ersten Faser-Vorform (3, 31) in einer Einspritzkammer (2), die in einem Werkzeug (1) nach einem der Ansprüche 1 bis 8 gebildet ist,
- (E2): Einspritzen eines Tonschlamms, der keramische Partikel in Suspension in einer flüssigen Phase umfasst, in die erste Faser-Vorform (3, 31) durch eine erste Seitenfläche (30a, 31a) der ersten Faser-Vorform (3, 31) durch mehrere erste Einspritzöffnungen (23a),
- (E3): Abziehen, durch mehrere erste Abzugsöffnungen (24a), der flüssigen Phase des Tonschlamms durch die erste Seitenfläche (30a, 31a) der ersten Faser-Vorform (3, 31) über ein erstes Filtrationselement (4a), das dazu ausgestaltet ist, die keramischen Partikel in der ersten Faser-Vorform (3, 31) zurückzuhalten.

10. Verfahren nach Anspruch 9, umfassend ferner die folgenden Schritte:
- (E10): Platzieren der ersten Faser-Vorform (31) und einer zweiten Faser-Vorform (32) in der Einspritzkammer (2), wobei die erste Faser-Vorform (31) und die zweite Faser-Vorform (32) sich auf beiden Seiten eines zentralen Kerns (6) befinden,
- (E2'): Einspritzen, durch mehrere zweite Einspritzöffnungen (23b), des Tonschlamms in die zweite Faser-Vorform (32) durch eine erste Seitenfläche (32a) der zweiten Faser-Vorform (32),
- (E3'): Abziehen, durch mehrere zweite Abzugsöffnungen (24b), der flüssigen Phase des Tonschlamms durch die erste Seitenfläche (32a) der zweiten Faser-Vorform (32) über ein zweites Filtrationselement (4b), das dazu ausgestaltet ist, die keramischen Partikel in der zweiten Faser-Vorform (32) zurückzuhalten.

11. Verfahren nach einem der Ansprüche 9 oder 10, wobei die erste Faser-Vorform (3, 31) auf einem porösen Träger fixiert ist, wobei das Verfahren einen Schritt der Abdichtung (E0) des Trägers gegenüber dem Tonschlamm vor dem Schritt der Einspritzung (E2, E2') des Tonschlamms in die erste Faser-Vorform (3, 31) umfasst, durch Einspritzung eines flüchtigen Materials in die Poren des Trägers, wobei das Verfahren ferner einen Schritt der Entfernung des flüchtigen Materials (E4) nach dem Abziehen der flüssigen Phase des Tonschlamms umfasst.

12. Verfahren nach einem der Ansprüche 9 bis 11, wobei die erste Faser-Vorform (3, 31) eine Dicke kleiner oder gleich 10 mm aufweist.

13. Verfahren nach einem der Ansprüche 10 oder 11, wobei zumindest eine aus der ersten Faser-Vorform (31) und der zweiten Faser-Vorform (32) eine Dicke kleiner oder gleich 10 mm aufweist.

## Claims

1. A tool (1) for manufacturing a ceramic matrix composite part by injecting a slurry, said tool (1) comprising an injection chamber (2) intended to receive at least one fibrous preform (3) to be densified, and:
- the injection chamber (2) comprises a plurality of first injection ports (23a) which are formed in a first side (21) of said injection chamber (2) for injecting the slurry into the injection chamber (2), said first injection ports (23a) being distributed along the first side (21) of the injection chamber (2);
- the injection chamber (2) comprises a plurality of first drainage ports (24a) which are formed on the first side (21) of said injection chamber (2) for draining a liquid phase of the slurry from the injection chamber (2), said first drainage ports (24a) being distributed along the first side (21) of the injection chamber (2); and
- the tool (1) comprises a first filtration element (4) which is located on the first side (21) of said injection chamber (2) and which is located opposite the first drainage ports (24a).

2. The tool (1) as claimed in claim 1, wherein between 2% and 30% of the surface area of the first side (21) of the injection chamber (2) is pierced by the first injection ports (23a) and the first drainage ports (24a).

3. The tool (1) as claimed in any one of claims 1 to 2, wherein at least one first injection port (23a) is located between two first drainage ports (24a).

4. The tool (1) as claimed in any one of claims 1 to 3, wherein the injection chamber (2) comprises a first end (2a) and a second end (2b) opposite the first end (2a), a first drainage port (24a) being located at the first end (2a) of the injection chamber (2) and a first drainage port (24a) being located at the second end (2b) of the injection chamber (2).

5. The tool (1) as claimed in any one of claims 1 to 4, wherein a plurality of second injection ports (23b) is located on a second side (22) of the injection chamber (2) which is opposite to the first side (21) of said injection chamber (2), wherein a plurality of second drainage ports (24b) is located on said second side (22) of said injection chamber (2), and wherein a second filtration element (4b) is located on said second side (22) of the injection chamber (2) opposite the second drainage ports (24b).

6. The tool (1) as claimed in any one of claims 1 to 5, wherein said tool (1) comprises a rigid and fixed mold (11) forming a second side (22) of the injection chamber (2) opposite the first side (21) of said injection chamber (2), and wherein the tool (1) comprises a rigid and movable counter-mold (12) which forms the first side (21) of the injection chamber (2).

7. The tool (1) as claimed in any one of claims 1 to 5, wherein said tool (1) comprises a rigid and fixed mold (11) forming a second side (22) of the injection chamber (2) opposite the first side (21) of said injection chamber (2), and wherein the tool (1) comprises a flexible membrane (13) which forms the first side (21) of the injection chamber (2).

8. The tool (1) as claimed in claim 7, wherein a draining felt (5) is arranged between the first filtration element (4a) and the first drainage ports (24a).

9. A process for manufacturing a ceramic matrix composite part comprising the following steps:
- (S1): placing a first fibrous preform (3, 31) in an injection chamber (2) formed in a tool (1) as claimed in any one of claims 1 to 8;
- (S2): injecting a slurry comprising ceramic particles suspended in a liquid phase into the first fibrous preform (3, 31) through a first side (30a, 31a) of said first fibrous preform (3, 31) through a plurality of first injection ports (23a);
- (S3): draining the liquid phase of the slurry through a plurality of first drainage ports (24a) from the first side (30a, 31a) of the first fibrous preform (3, 31) through a first filtration element (4a) configured to retain the ceramic particles in the first fibrous preform (3, 31).

10. The process as claimed in claim 9, further comprising the following steps:
- (S10): placing the first fibrous preform (31) and a second fibrous preform (32) in the injection chamber (2), the first fibrous preform (31) and the second fibrous preform (32) being located on either side of a central core (6);
- (S2'): injecting through a plurality of second injection ports (23b) the slurry into the second fibrous preform (32) through a first side (32a) of said second fibrous preform (32);
- (S3'): draining the liquid phase of the slurry through a plurality of second drainage ports (24b) from the first side (32a) of the second fibrous preform (32) through a second filtration element (4b) configured to retain the ceramic particles in the second fibrous preform (32).

11. The process as claimed in any one of claims 9 or 10, wherein the first fibrous preform (3, 31) is fixed on a porous support, the process comprising a step of sealing (50) the support with the slurry before the step of injecting (S2, S2') the slurry into the first fibrous preform (3, 31) by injecting a fugitive material into the porosities of said support, the process further comprising a step of removing the fugitive material (S4) after the liquid phase of the slurry has drained.

12. The process as claimed in any one of claims 9 to 11, wherein the first fibrous preform (3, 31) has a thickness of 10 mm or less.

13. The process as claimed in any one of claims 10 or 11, wherein at least one among the first fibrous preform (31) and the second fibrous preform (32) has a thickness of 10 mm or less.
